# EUROPÄISCHE PATENTANMELDUNG

(11) **EP 1 006 367 A2**
(43) Veröffentlichungstag der Anmeldung: **07.06.2000**
(21) Anmeldenummer: 99440336.8
(22) Anmeldetag: 02.12.1999
(51) Int. Cl.: G01S 5/14, G01C 21/30

(54) **Satellitengestütztes map-matching-Verfahren**

(30) Priorität: 05.12.1998 DE 19856187
(71) Anmelder: ALCATEL, 75008 Paris (FR)
(72) Erfinder: Idler, Horst, 70439 Stuttgart (DE)
(74) Vertreter: Brose, Gerhard, Dipl.-Ing.

(57) **Zusammenfassung**

Die Erfindung betrifft ein satellitengestütztes map-matching-Verfahren zur fahrzeugautonomen Positionsbestimmung. Zur Erhöhung der Genauigkeit ist erfindungsgemäß vorgesehen, daß bei topographisch bedingter Unterbrechung des Empfangs des Satellitensignals, insbesondere bei Tunnel- und Brückendurchfahrt, das Satellitensignal zu Beginn und/oder am Ende der Unterbrechung in bezug auf die bekannten Koordinaten des topographischen Wegpunktes zur Ermittlung eines Korrekurwertes zur Korrektur des satellitengestützten Navigationssystems verwendet wird/werden.

## Beschreibung

Die Erfindung betrifft ein satellitengestützes map-matching-Verfahren sowie ein On Board Unit zur Durchführung des Verfahrens gemäß den Oberbegriffen der Patentansprüche 1 und 3.

Die fahrzeugautonome Positionsbestimmung ist von herausragender Bedeutung für verschiedene Anwendungen, insbesondere für Flottenmanagement, Navigationshilfe und Straßenbenutzungsgebühren-Erfassungssysteme. Bekannt sind satellitengestützte Verfahren, die auf einer zweidimensionalen Ortung basieren. Die erreichbare Genauigkeit liegt bei ca. 50 m. Durch Einsatz eines DGPS-Verfahrens (Differential Global Positioning System) lassen sich Genauigkeiten bis ca. 5 m erzielen. Dabei werden absolute Wegpunkte, beispielsweise Funkbaken, bekannter Koordinaten zur Korrektur der satellitengestüzt, d.h. mittels GPS (Globel Positioning System), ermittelten Positionen verwendet. Bei der Funkbakenmethode ist nachteilig, daß derartige Funkbaken nur an wenigen Orten vorhanden sind und daß eine Übertragungstechnik zur Übermittlung des Signals der Funkbake an den GPS-Empfänger im Fahrzeug erforderlich ist.

Es besteht deshalb die Aufgabe, ein Verfahren der oben genannten Gattung anzugeben, das sich durch erhöhte Genauigkeit, verbesserte Verfügbarkeit und Einsparung der Übertragung der Korrekturdaten auszeichnet.

Erfindungsgemäß wird die Aufgabe durch die kennzeichnenden Merkmale des Anspruchs 1 gelöst. Die Erfindung basiert auf der Erkenntnis, daß sich markante Topographie-Merkmale in besonderer Weise als Referenzpunkte eignen. Die Koordinaten dieser Referenzpunkte werden einmal so genau wie möglich festgestellt und dienen dann als Datenmaterial für ein map-matching-System. Das map-matching-System vergleicht die GPS-Daten mit gespeicherten Straßenkartendaten bzw. Streckendaten, um auf diese Weise beispielsweise festzustellen, ob sich das Fahrzeug auf einer gebührenpflichtigen Straße befindet oder nicht. Die Entscheidungssicherheit wird erfindungsgemäß verbessert, indem die genau vermessenen Koordinaten, insbesondere von Brücken, mit dem GPS-Meßwert verglichen werden und aus der Abweichung ein entsprechender Korrekturwert abgeleitet wird.

Gemäß Anspruch 2 findet dieser Korrekturwert zusätzlich auch Verwendung zur Eichung weiterer fahrzeugautonomer Navigationssysteme. Derart geeichte zusätzliche Navigationssysteme ermöglichen auch im Falle einer zeitweisen Abschattung, insbesondere brücken- oder tunnelbedingt, des GPS-Empfangs eine zweidimensionale Positionsermittlung in einem bestimmten Zeitinterval zu erhalten, so daß eine hundertprozentige Verfügbarkeit der Fahrzeugpositionen gegeben ist.

Anspruch 3 kennzeichnet ein On Board Unit zur Durchführung des Verfahrens, mit einem GPS-Empfänger und einem map-matching-System, wobei topographische Wegpunkte mit Hilfe der in dem map-matching-System gespeicherten Straßendaten erkannt werden und bei Erreichen eines bestimmten Abstandes des Fahrzeuges von einem derartigen Wegpunkt die Empfangsfeldstärke der Satellitensignale abgesenkt wird. Üblicherweise ist der GPS-Empfänger für Signalverarbeitung im Sekundentakt eingestellt. Diese Sekundenauflösung ist für die Feststellung von Abschattungskanten, insbesondere bei hohen Geschwindigkeiten, nicht mehr ausreichend. Um rechtzeitig vor dem Passieren der Abschattungskante die Empfangsfeldstärke der Satellitensignale zu erkennen, sollte der GPS-Empfänger in einem bestimmten Abstand vor dem zu erfassenden Wegpunkt in einen Feldstärke-Erkennungsmode umgeschaltet werden. Dieser Abstand kann beispielsweise auf 150m festgelegt werden. Tritt nun eine Verbindungsunterbrechung bzw. Signal-Abschattung zwischen Satelliten und GPS-Antenne auf, geht die Empfangsfeldstärke kurzzeitig abrupt auf einen sehr niedrigen Wert. Dieses "Loch" in der Empfangsfeldstärke läßt sich zeitlich exakt vermessen, so daß ein sehr genaues Kriterium zur Verfügung steht, zu entscheiden, welcher satellitengestützte Positionsmeßwert mit der gespeicherten absoluten Position des topographischen Wegpunktes zu vergleichen ist. Auf diese Weise ergibt sich eine relativ einfache Möglichkeit, einen Korrekturwert zur Korrektur des Meßfehlers des satellitengestützen Navigationssystems zu bestimmen. Je nachdem, welcher topographischer Wegpunkt als absoluter Wegpunkt im map-matching-System gespeichert ist, kann dabei der Beginn oder das Ende der Empfangsunterbrechung zugrunde gelegt werden. Denkbar ist jedoch auch eine Verknüpfung der beiden GPS-Meßwerte, um absolute Wegpunkte zwischen den Abschattungskanten, beispielsweise die Mitte einer Brückendurchfahrt, berücksichtigen zu können. Wird im map-matching-Algorithmus diese örtlich sehr genaue und eindeutige Information berücksichtigt, gestattet diese zusätzliche Orientierung anhand topographischer Wegpunkte eine erhebliche Verbesserung der Entscheidungssicherheit, auf welcher Straße sich ein Fahrzeug gerade befindet. Diese Frage ist bei der Erfassung von Straßenbenutzungsgebühren von besonderer Bedeutung. Insbesondere Brücken- und Tunneldurchfahrten sind als topographische Wegpunkte im allgemeinen in ausreichender Zahl und in ausreichend geringem Abstand vorhanden.

Bevorzugt ist die rechtzeitige Erkennung einer bevorstehenden "Abschattungskante" gemäß Anspruch 4 durch einen ereignisgesteuerten Triggerausgang realisiert.

Bei den üblicherweise mehrkanaligen, auf mehrere GPS-Satellitten einstellbaren GPS-Empfängern können zusätzlich gemäß Anspruch 5 Auswahlmittel zur Beschränkung der Signalauswertung auf die geeignetsten GPS-Satelliten vorgesehen sein. Bei Tunnel- und Brückendurchfahrten sind das die zenitnahen GPS-Satellitten, da die Abschattungskante bei horizontnahen Satelliten zu früh oder zu spät erfaßt wird und somit ein Meßfehler gegenüber den Absolutkoordinaten der Abschattungskante resultiert.

Die Erfindung wird nachfolgend anhand eines figürlich dargestellten Ausführungsbeispiels näher erläutert.

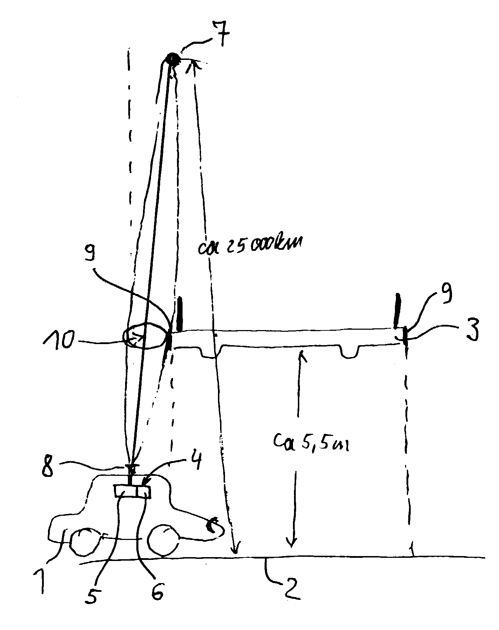

Die Figur zeigt in schematischer Darstellung ein Fahrzeug 1 auf einer Straße 2, unmittelbar vor dem Durchfahren einer die Straße 2 überquerenden Brücke 3. Das Fahrzeug 1 ist mit einem On Board Unit 4 mit GPS-Empfänger 5 und Map-Matching-System 6 ausgestattet. Ein GPS-Satellit 7 übermittelt Signale, deren Laufzeit ein Maß für die Position des Fahrzeuges 1 darstellen, über eine GPS-Antenne 8 an den Empfänger 5. Der Brückenrand wirkt quasi als Abschattungskante 9, wodurch der direkte Satellitenempfang während der Durchfahrtzeit durch die Brücke 3 unterbrochen wird. Die Abschattungskante 9 läßt sich sehr genau feststellen, indem das letzte noch empfangene Satellitensignal verwendet wird, um die ermittelte Position mit der durch das map-matching-System 6 gespeicherten absoluten Position der Abschattungskante 9 zu vergleichen. Abweichungen in einer bestimmten Größenordnung können zur Berechnung eines Korrekturwertes zur Korrektur des Satellitensignals verwendet werden. Größere Abweichungen lassen darauf schließen, daß eine durch das map-matching-System 6 unter Zuhilfenahme der GPS-gestützten Positionsdaten quasi geschätzte Zuordnung der Fahrzeugposition zu den gespeicherten Absolutkoordinaten der Brücke 3 falsch war. Diese Zuordnung wird ca. 150 m vor der Brücke, d. h. im Bereich der dreifachen GPS-Genauigkeit, vorgenommen, um geeignete Satelliten 7 - im Fall der Brückendurchfahrt zenitnahe Satelliten - auszuwählen und den Empfangs-modus des GPS-Empfängers 5 vom üblicherweise 1-Sekunden-Takt in einen erheblich höherfrequenten Empfangsmodus umzuschalten.

Es ist ersichtlich, daß zwischen dem GPS-Satelliten 7 und der GPS-Antenne 8 eine Abschattungszone - ähnlich dem Halbschatten beim Sonnenlicht - existiert. Diese sogenannte Fresnel-Zone 10 hat jedoch nur einen Durchmesser von ca. ½ Wellenlänge - ca. 0,1 m - und ist demzufolge vernachlässigbar.

Die Erfindung beschränkt sich nicht auf das vorstehend angegebene Ausführungsbeispiel. Vielmehr ist eine Anzahl von Varianten denkbar, welche auch bei grundsätzlich andersgearteter Ausführung von den Merkmalen der Erfindung Gebrauch machen.

## Patentansprüche

1. Satellitengestütztes map-matching-Verfahren zur fahrzeugautonomen Positionsbestimmung, dadurch gekennzeichnet, daß bei topographisch bedingter Unterbrechung des Empfangs des Satellitensignals, insbesondere bei Tunnel- und Brückendurchfahrt, das Satellitensignal zu Beginn und/oder am Ende der Unterbrechung in bezug auf die bekannten Koordinaten des topographischen Wegpunktes zur Ermittlung eines Korrektursignals zur Korrektur des Satellitensignals verwendet wird/werden.

2. Verfahren nach Anspruch 1, dadurch gekennzeichnet, daß der Korrekturwert zur Eichung weiterer fahrzeugautonomer Navigationssysteme, insbesondere mit Tachometer-Wegstreckenmessung - und/oder Kreiselstützung, verwendet wird.

3. On Board Unit (4) zur Durchführung des Verfahrens nach einem der vorangehenden Ansprüche, wobei ein GPS-Empfänger (Global-Positioning-System) (5) mit einem map-matching-System (6) zusammenwirkt, dadurch gekennzeichnet, daß das map-matching-System (6) Analysemittel zum Erkennen in einem vorgegebenen Abstand befindlicher und voraussichtlich zu passierender topographischer Wegpunkte aufweist, wobei ein Signalausgang der Analysemittel die Empfangsfeldstärke der Satellitensignale des GPS-Empfängers (5) im Sinne einer Absendung beaufschlagt.

4. On Board Unit (4) nach Anspruch 3, dadurch gekennzeichnet, daß der Signalausgang als ereignisgesteuerter Triggerausgang ausgebildet ist.

5. On Board Unit (4) nach Anspruch 3 oder 4 mit einem mehrkanaligen, auf mehrere GPS-Satelliten (7) einstellbaren GPS-Empfänger (5), gekennzeichnet durch Auswahlmittel zur Identifizierung und Kanalzuordnung mindestens eines von der Art des topographischen Wegpunktes abhängigen GPS-Satelliten (7), insbesondere eines zenitnahen GPS-Satelliten (7) bei Tunnel- und Brückendurchfahrt.
